(19) **Europäisches Patentamt**

**European Patent Office**

**Office européen des brevets**

(11) Veröffentlichungsnummer: **0 015 472 B1**

(12) **EUROPÄISCHE PATENTSCHRIFT**

(45) Veröffentlichungstag der Patentschrift:
**17.11.82**

(21) Anmeldenummer: **80100921.8**

(22) Anmeldetag: **25.02.80**

(51) Int. Cl.³: **B 65 D 1/28**

(54) Leicht zu öffnende Packung sowie Verfahren zu ihrer Herstellung und ihre Verwendung.

(30) Priorität: **03.03.79 DE 2908381**

(43) Veröffentlichungstag der Anmeldung:
**17.09.80 Patentblatt 80/19**

(45) Bekanntmachung des Hinweises auf die Patenterteilung:
**17.11.82 Patentblatt 82/46**

(84) Benannte Vertragsstaaten:
**BE DE FR GB IT NL SE**

(56) Entgegenhaltungen:
**AT-B-337.071**
**DE-A-2 159 641**
**DE-A-2 255 026**
**DE-A-2 356 099**
**DE-B-2 015 116**

(73) Patentinhaber: **HOECHST AKTIENGESELLSCHAFT,
Postfach 80 03 20, D-6230 Frankfurt/Main 80 (DE)**

(72) Erfinder: **Schad, Alfred, Hauberisserstrasse 21,
D-6200 Wiesbaden (DE)**
Erfinder: **Siebrecht, Manfred, Dr., Buchenweg 10,
D-6200 Wiesbaden (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Leicht zu öffnende Packung sowie Verfahren zu ihrer Herstellung

Die Erfindung bezieht sich auf eine leicht zu öffnende Packung aus zwei übereinander liegenden Packungswänden, die im Randbereich der Packung miteinander durch Siegeln verbunden sind, wobei wenigstens eine Packungswand aus einer dreischichtigen Verbundfolie besteht und diese eine innenliegende leicht spaltbare Schicht umfaßt.

Die Erfindung bezieht sich ferner auf ein Verfahren zur Herstellung der Packung sowie deren Verwendung, insbesondere zum Verpacken bevorzugt formfester Nahrungs- und Genußmittel sowie Fertiggerichte.

Packungen dieser Art, die auch als Peel-Packungen bekannt sind, lassen sich von Hand auf einfache Weise öffnen, indem man die miteinander verbundenen Packungswände voneinander abzieht bzw. abschält, ohne daß zum Beispiel eine Schere oder ein anderes Hilfsmittel angewendet werden muß.

So ist es bekannt, diese Packung durch die Verwendung eines geeigneten Klebers bzw. einer speziellen Siegelschicht oder siegelbaren Folie herzustellen. Hierbei kann man zum Beispiel beim Abziehen einer Deckelfolie von einem Behälter die Klebstoffschicht auseinanderreißen, wenn man einen Kleber aus einem wachshaltigen Stoffgemisch einsetzt (DE-B-2 015 116). Die Belastbarkeit dieser Verschlußnähte gegen Krafteinwirkung ist jedoch vergleichsweise gering; es können zum Beispiel keine Vakuumpackungen hergestellt werden. Außerdem empfiehlt es sich, das Füllgewicht dieser Packungen möglichst gering zu halten. Ferner müssen beim Siegelvorgang die Siegelbedingungen genau eingehalten werden, damit die optimale Festigkeit der Siegelnaht, welche ein leichtes Aufreißen der Packung gewährleistet, ereicht werden kann.

Es ist auch Stand der Technik, Siegelschichten aus verschiedenem Material gegeneinander zu siegeln, wobei die Siegelschichten beim Aufreißen der Packung im wesentlichen nicht beschädigt werden und miteinander verbunden bleiben. Der Abriß erfolgt durch Dekaschierung der Siegelschicht von der Trägerfolie (DE-B-2 255 026). Die erforderliche Kraft zum Abziehen der miteinander verbundenen Packungswände ist in diesem Fall vergleichsweise groß. Beim Aufziehen der Packung reißt diese ruckartig auf, wobei die Gefahr besteht, daß der Inhalt der Packung herausfällt. Ferner kann die erforderliche Kraft zum Aufreißen dieser Packung von der Einreißrichtung abhängig sein, da die Siegelschicht gewöhnlich in einer Richtung bevorzugt orientiert ist.

Ausgehend von dem aufgezeigten Stand der Technik liegt der vorliegenden Erfindung die Aufgabe zugrunde, eine leicht zu öffnende Packung vorzuschlagen, die die genannten Nachteile nicht aufweist. Die Packung besitzt einerseits ausreichend feste, belastbare Siegelnähte, andererseits soll die Packung mit sich innerhalb enger Grenzen bewegendem, geringem Kraftaufwand zu öffnen sein. Die Packung ist koch- und sterilisierbar und eignet sich vorteilhaft zum Verpacken von bevorzugt formfesten Lebens- und Genußmitteln sowie Fertiggerichten.

Die der Erfindung zugrunde liegende Aufgabe wird gelöst durch eine leicht zu öffnende Packung aus zwei übereinander liegenden Packungswänden, die im Randbereich der Packung durch Siegeln miteinander verbunden sind, bei denen die eine Packungswand aus einer wenigstens dreischichtigen, eine siegelfähige Oberfläche aufweisenden Verbundfolie und die andere aus einem wenigstens einlagigen Film mit siegelfähiger Oberfläche besteht, die dadurch gekennzeichnet ist, daß die aus der Verbundfolie gebildete Packungswand aus einer ersten Schicht einer Dicke im Bereich von 0,1 bis 10 µm aus siegelfähigem Polymerisat auf Basis von Polyolefin, einer sich an diese anschließenden zweiten, feste Teilchen einer Größe im Bereich von 0,2 bis 20 µm in einer Menge im Bereich von 1 bis 25 Gew.-% enthaltenden, streckorientierten Schicht aus Polymerisat aus α-Olefin mit 2 bis 6 C-Atomen und einer an diese angrenzenden dritten Schicht, die aus einer wenigstens einschichtigen Folie besteht, aufgebaut ist, wobei

a) die zweite Schicht der Verbundfolie mit sich innerhalb enger Grenzen bewegendem, geringem Kraftaufwand spaltbar,

b) die Verbundfestigkeiten zwischen der zweiten und den jeweils an diese angrenzenden Schichten größer als die Spaltfestigkeit der zweiten Schicht und

c) die Siegelnahtfestigkeit der ersten Schicht mit der anderen Packungswand größer als die Spaltfestigkeit der zweiten Schicht der Verbundfolie

ist.

Die Unteransprüche 2 bis 10 beschreiben Weiterbildungen der erfindungsgemäßen Packung. Die Erfindung betrifft ferner das in Anspruch 11 angegebene Verfahren sowie die Verwendung der Packung zum Verpacken von insbesondere formfesten Lebens- und Genußmitteln.

Im folgenden wird der Begriff »siegelbar« gleichbedeutend mit »schweißbar« verwendet.

Die erste Schicht der eine Wand der Packung bildenden Verbundfolie, welche die Siegelfähigkeit derselben gewährleistet, besteht aus Polyolefin. Die siegelfähige Schicht der Verbundfolie hat eine Dicke im Bereich von 0,1 bis 10 µm, bevorzugt 0,5 bis 2 µm. Es ist überraschend, daß eine Siegelschicht derartig geringer Dicke zu einer dichten und belastbaren Siegelnaht zwischen erster und zweiter Wand der Packung führt. Bevorzugt besteht die erste Schicht aus Polyäthylen, oder Copolymerisat, das zu 94 bis 99 Gew.-%, bevorzugt 95 bis 97 Gew.-% aus copolymerisiertem Propylen und 1 bis 6 Gew.-%, bevorzugt 3 bis 6 Gew.-%, aus copolymerisiertem Äthylen besteht oder aus Copolymerisat, das zu 85 bis 90 Gew.-% aus copolymerisiertem Propylen und zu 10 bis 15 Gew.-% aus copolymerisiertem Buten-(1) aufgebaut ist oder aus einem Terpolymerisat, das zu 93,2 bis 99 Gew.-% aus copolymerisiertem Propylen, zu 0,5 bis 1,9 Gew.-% aus copolymerisiertem Äthylen und zu 0,5 bis 4,9 Gew.-% aus copolymerisiertem $\alpha$-Olefin mit 4 bis 10 C-Atomen, vorzugsweise Buten-(1) oder Hexen-(1) besteht. Die gewichtsprozentualen Angaben beziehen sich dabei jeweils auf das Gesamtgewicht des Polymerisats.

In den bezeichneten Copolymerisaten sind die copolymerisierten Molekularstruktureinheiten jeweils statistisch verteilt.

Die zur Ausbildung der siegelfähigen Schicht der Verbundfolie geeigneten Polymerisate sind beispielsweise in den DE-A-1 694 694, DE-A-2 460 597 sowie DE-A-2 637 978 beschrieben.

Die zweite Schicht der eine Packungswand bildenden Verbundfolie ist streckorientiert und enthält gleichmäßig fein verteilte, feste Teilchen und besteht aus Homo- oder Copolymerisat aus $\alpha$-Olefin mit 2 bis 6, vorteilhaft 2 bis 4 C-Atomen, insbesondere vorteilhaft aus Propylen, ganz besonders vorteilhaft mit einem isotaktischen Anteil von mindestens 90%.

Die in der zweiten Schicht der Verbundfolie gleichmäßig feinverteilten, festen Teilchen besitzen eine Größe im Bereich von 0,2 bis 20 µm, vorteilhaft im Bereich von etwa 2 bis 8 µm und sind in der zweiten Schicht in einer Menge im Bereich von 1 bis 25 Gew.-%, bezogen auf das Gewicht des die Schicht bildenden Polymerisats, enthalten. Vorteilhaft enthält die zweite Schicht die festen Partikel in einer Menge im Bereich von 5 bis 15 Gew.-%, bezogen auf das Gewicht des die Schicht bildenden Polymerisats.

Die festen Partikel bestehen beispielsweise aus anorganischem Material, beispielsweise aus Titandioxid, Calciumcarbonat, Glas oder Siliciumdioxid.

Erfindungsgemäß sind auch Partikel aus organischen, chemischen Verbindungen, beispielsweise solche aus vernetztem Kunststoff geeignet, sofern sie formbeständig sind und ihr Schmelz- bzw. Zersetzungspunkt oberhalb der während des Herstellungs- bzw. Verarbeitungsprozesses auftretenden Temperaturen liegt und ihre Löslichkeit in dem, die zweite Schicht der Verbundfolie bildenden Material relativ gering ist.

Die Dicke der zweiten Schicht liegt vorteilhaft im Bereich von 8 bis 100 µm, insbesondere vorteilhaft im Bereich von 15 bis 50 µm.

Die zweite Schicht der eine Packungswand bildenden Verbundfolie ist mit sich innerhalb enger Grenzen bewegendem geringem Kraftaufwand leicht parallel zu ihrer Oberfläche spaltbar.

Die dritte Schicht besteht aus einer wenigstens einlagigen Folie, beispielsweise aus streckorientiertem Polyester, beispielsweise Polyäthylenterephthalat, einer Folie aus Polyamid, die gegebenenfalls streckorientiert ist oder einer Folie aus Polypropylen, wobei diese gegebenenfalls bei ihrer Herstellung durch Strecken orientiert ist.

Eine wie bezeichnet angegebene dritte Schicht hat eine Dicke im Bereich von 8 bis 80 µm, vorteilhaft eine Dicke im Bereich von 12 bis 60 µm.

Die die dritte Schicht des Folienverbunds bildende, wenigstens einlagige Folie kann auch beispielsweise zweilagig dergestalt aufgebaut sein, daß vorbezeichnete Folie entsteht, die mit einer Lage Aluminiumfolie verbunden ist, die die Durchlässigkeit der Verbundfolie für Gase vermindert.

Eine derart aufgebaute dritte Schicht hat vorteilhaft eine gesamte Dicke im Bereich von 20 bis 30 µm, wobei die Lage aus Aluminium vorteilhaft eine Dicke im Bereich von 8 bis 15 µm besitzt.

Trotz des Anteils feinverteilter fester Teilchen in der zweiten Schicht, beispielsweise anorganischer Teilchen hoher Dichte, hat diese eine Dichte von beispielsweise kleiner als 0,8 g/cm$^3$ und ist damit geringer als eine stofflich gleichartig aufgebaute, jedoch nicht gestreckte Schicht; sie ist sogar geringer als die einer Schicht aus vergleichbarem $\alpha$-Olefin-Polymerisat, die keine Teilchen enthält.

Dies ist darauf zurückzuführen, daß die zweite Schicht in der genannten Packungswand eine Vielzahl, jeweils feste Teilchen enthaltende Hohlräume aufweist, die infolge Streckung bei der Herstellung der die zweite Schicht bildenden Folie entstehen.

Streckorientierte Folien mit festen Teilchen enthaltenden Hohlräumen sind in der DE-B-1 504 522 beschrieben.

Die erste Schicht der aus genannter Verbundfolie bestehenden Packungswand zeigt beim Siegeln auf die zweite Packungswand den Vorteil, daß die hierfür erforderliche Temperatur unterhalb des Schmelzpunktes der die zweite Schicht bildenden Substanzen liegt; dadurch ist gewährleistet, daß die die festen Teilchen enthaltenden Hohlräume der zweiten Schicht beim Versiegeln der ersten Packungswand mit der zweiten erhalten bleiben. Die Verbundfestigkeit zwischen der zweiten Schicht und den jeweils an sie angrenzenden Schichten ist größer als die Spaltfestigkeit der zweiten Schicht.

Die Siegelnahtfestigkeit der ersten Schicht mit der anderen Packungswand der Packung ist größer als die Spaltfestigkeit der zweiten Schicht der die eine Packungswand bildenden dreischichtigen Verbundfolie.

Beim Auseinanderziehen der miteinander versiegelten Packungswände der Packung zum Zwecke des Öffnens derselben wird die erste Schicht der einen Packungswand in der Fläche durchrissen und dabei praktisch zugleich die zweite Schicht derselben parallel zur Oberfläche aufgespalten.

Die Packung ist beispielsweise als Behälter mit Deckel ausgebildet. Der oben offene Behälter besitzt an seiner Seitenwand einen um die Behältermündung laufenden nach außen wegragenden Flanschrand. Der Behälterdeckel überdeckt Behälteröffnung sowie Behälterflanschrand. Zur Herstellung der Behälterpackung geht man von einem Folienstück, beispielsweise einem Laminat aus Polyamid und Polyäthylen aus und stellt aus diesem nach dem Warmformverfahren, in an sich bekannter Weise, einen Behälter der genannten Raumform in der Weise her, daß die Polyäthylenschicht des Laminats die Innenseite des Behälters und die Auflagefläche seines Flanschrandes bildet.

Als Deckel verwendet man beispielsweise ein planes Folienstück aus dreischichtiger Verbundfolie des genannten Aufbaus.

Der Deckel ist derart zum Behälter angeordnet, daß seine siegelfähige Schicht an die Auflagefläche des Flanschrandes angrenzt.

Der Deckel wird mit dem Behälterflanschrand in bekannter Weise und mittels bekannter Vorrichtungen versiegelt. Zur Erleichterung des Öffnens der Packung durch Abziehen der miteinander verbundenen Packungswände ist an der Packung vorteilhaft eine Aufreißlasche und/oder ein Packungswandüberstand vorgesehen. Beispielsweise besitzt oben bezeichnete Behälterpackung am Flanschrand des Behälters vorteilhaft einen radial nach außen wegragenden flächigen, planen Vorsprung, im Bereich dessen der an ihn angrenzende und ihn abdeckende Deckel nicht mit bezeichnetem Flanschvorsprung versiegelt ist. Der nicht mit dem Flanschrandvorsprung versiegelte Teil des Deckels dient als Aufreißlasche zum bzw. beim Öffnen der Packung.

Die beiden Packungswände der Packung können jeweils aus bezeichneter dreischichtiger Verbundfolie bestehen. Gewöhnlich wird man jedoch aus wirtschaftlichen Gründen nur eine Packungswand aus bezeichneter, dreischichtiger Verbundfolie ausbilden, während die andere beispielsweise aus Polypropylen oder Polyäthylen besteht oder bevorzugt aus einem Filmlaminat gebildet ist, das Polyamid-, Polyester-, Zellglas- und/oder Aluminiumfolie sowie eine siegelfähige Schicht aus Polyolefin, insbesondere aus Polyäthylen umfaßt; insbesondere vorteilhaft besteht sie aus einem Laminat aus Polyamid und Polyäthylen. Vorteilhaft haben die siegelfähigen Schichten der Verpackungswände übereinstimmenden chemischen Aufbau.

Bei Packungen aus Behälter und Deckel besteht der Deckel vorteilhaft aus bezeichneter dreischichtiger Verbundfolie.

Die Packung kann auch als Siegelrandbeutel, gegebenenfalls einem solchen mit Bodenfalte oder auch als Schlauchbeutel ausgebildet sein.

Der Siegelrandbeutel kann aus zwei übereinander angeordneten Folienbahnen durch Versiegelung jeweils ihrer Bahnkanten hergestellt sein.

Bei der Herstellung des Schlauchbeutels wird eine Längsnaht erzeugt, wobei vorteilhaft die Innenseite gegen die Außenseite gesiegelt wird.

Auch Beutel mit einer Klappe, wie beispielsweise der im DE-U-7 701 563 beschriebene Tabaksbeutel, sind als Packungsform geeignet.

Die die eine Wand der Packung bildende dreischichtige Verbundfolie ist beispielsweise dadurch herstellbar, daß man nach bekannten Coextrusionsverfahren zur Herstellung von Folien, beispielsweise von Flachfolien, zunächst feste Partikel in feiner Verteilung enthaltende Schmelze aus bezeichnetem $\alpha$-Olefin-Polymerisat, beispielsweise Polypropylen mit Polyolefin-Schmelze, beispielsweise Polyäthylen zu einem zweischichtigen Laminat coextrudiert und dieses streckorientiert, bevorzugt biaxial und dann thermofixiert. Die Streckorientierung und nachfolgende Thermofixierung erfolgt dabei nach bekannten Verfahren sowie mit bekannten Vorrichtungen.

Zur Herstellung der dreischichtigen Verbundfolie wird das zweischichtige Folienlaminat mit einer Kunststoff-Folie, beispielsweise einer biaxial streckorientierten Polyesterfolie derart verbunden, beispielsweise durch Kleberkaschierung, daß sie an die $\alpha$-Olefin-Schicht des zweilagigen Coextrudats angrenzt.

Zur Herstellung einer beispielsweise behälterartigen Packung, bestehend aus einem Behälterunterteil, beispielsweise aus Polypropylenfolie, mit an dessen oberen Öffnungsrand umlaufenden, nach außen wegragendem flanschartigen Mündungsrand und einem diesem aufliegendem und die Behälteröffnung abdeckenden Deckel aus dreischichtiger Verbundfolie des genannten Aufbaus, wobei die erste Schicht der Verbundfolie an die Oberfläche des Behältermündungsrands angrenzt, geht man von einem Folienstück aus Polypropylen aus, aus dem man im Warmformverfahren in bekannter Weise einen Behälter der genannten Raumform herstellt und dann den Behälterdeckel mit seiner siegelfähigen Außenseite mit dem umlaufenden Mündungsrand des Behälters in bekannter Weise und mittels bekannter Vorrichtungen bei einer Temperatur im Bereich von 130 bis 170°C versiegelt; vorteilhaft weist der Mündungsrand des Behälterunterteils einen radial nach außen wegragenden Vorsprung auf, im Bereich dessen der an dessen Oberseite angrenzende Decke nicht mit der Unterlage versiegelt ist. Der nicht mit dem Vorsprung des Mündungsrandes versiegelte Teil des Deckels dient als Aufreißlasche zum bzw. beim Öffnen der Packung.

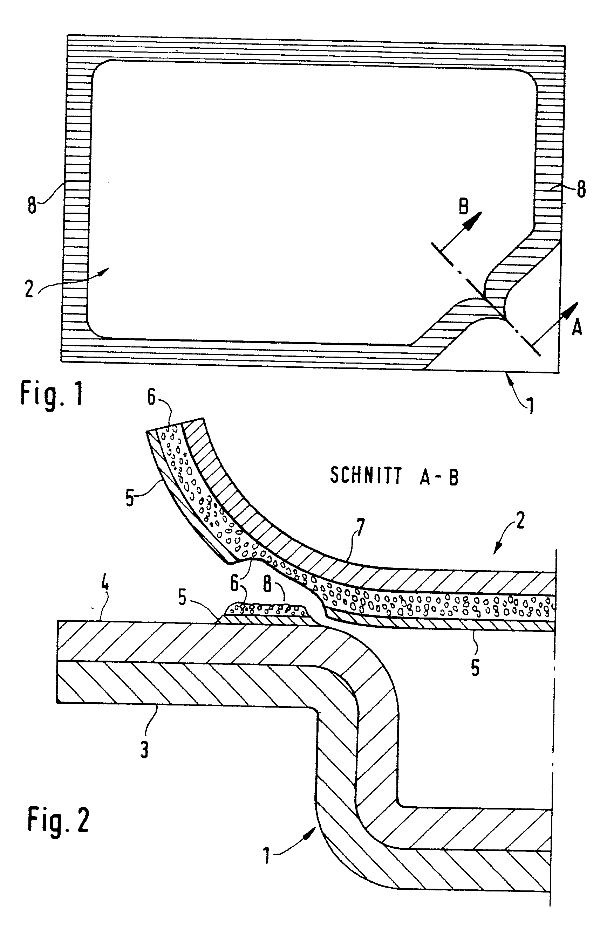

In den Fig. 1 und 2 ist als Beispiel für die Packung ein thermogeformtes, standfestes schalenartiges Behältnis 1 dargestellt, welche mit einer Deckelfolie 2 verschlossen ist.

Fig. 1 zeigt das Behältnis in Draufsicht.

Fig. 2 in Seitenansicht und im Schnitt entlang der Linie A-B der Fig. 1.

Das Behältnis 1 besteht aus einem Film 3, der mit einer siegelfähigen Schicht 4 versehen ist. Der die Außenseite des Behältnisses 1 bildend Film 3 ist beispielsweise eine biaxial gestreckte Polyesterfolie, eine nicht gestreckte Polyamidfolie oder eine Zellglasfolie, oder sie besteht aus einem Verbund aus einer der genannten Folien mit einer Aluminiumfolie.

Die siegelfähige Schicht 4 auf dem Film 3 besteht beispielsweise aus Polyäthylen.

Der Deckel 2 des Behälters besteht aus einer dreischichtigen Verbundfolie, deren erste Schicht 5 aus siegelfähigem Polymerisat aufgebaut ist, an die Schicht 5 grenzt die streckorientierte Schicht 6 aus α-Olefin-Polymerisat an, die eine Vielzahl jeweils feste Partikel enthaltende Hohlräume aufweist. An die andere Oberfläche der Schicht 6 grenzt eine Folie 7 an, deren freie Oberfläche die Sichtseite des Behälterdeckels bildet. Am Rand des Behältnisses 1 ist der Deckel 2 bereits durch Ziehen vom Flanschrand des Behälters 1 abgelöst, wobei die Spiegelschicht 5 des Deckels durchrissen und die Schicht 6 eingerissen und abgespalten ist. Im Bereich des Aufrisses bleibt die siegelfähige Schicht 4 des Behälters 1 mit einem Teil der siegelfähigen Schicht 5 des Deckels 2 miteinander verbunden. Der genannte Bereich wird mit Ziffer 8 bezeichnet. Sofern die dargestellte Packung zum Verpacken von Material dienen soll, das insbesondere gegen die Einwirkung von Luft geschützt werden muß, ist es zweckmäßig, daß die die Packung bildenden Packungswände eine Schicht mit geringer Gasdurchlässigkeit umfassen, beispielsweise einer solchen aus Polyvinylidenchlorid oder Aluminium.

Die Packung zeigt den Vorteil, daß sie ohne Kraftanstrengung durch leichtes, manuelles Abschälen der miteinander verbundenen Packungswände zu öffnen ist. Die Siegelnaht ist ausreichend fest und belastbar und hält selbst den hohen Temperaturen der Sterilisation stand. Es sind zwar hitzebeständige siegelbare Verbunde bekannt, zum Beispiel Polyester/Aluminium/ Niederdruckpolyäthylen, die eine thermische Belastbarkeit von etwa 120°C vertragen, jedoch sind Packungen aus diesem Material nicht leicht zu öffnen. Die verpackten Güter können bei 75 bis 100°C im Wasserbad pasteuerisiert und sogar bei 110 bis 130°C im Druckkessel sterilisiert werden. Es werden die üblichen Pasteurisier- bzw. Sterilisierbedingungen eingehalten. Selbst fetthaltige Füllgüter beeinflussen während der Lagerung die Festigkeit der Siegelnaht nicht. Als zu sterilisierende Lebensmittel sind zum Beispiel Fertiggerichte und bestimmte Käsearten zu nennen.

Die Materialien der Packung sind physiologisch unbedenklich.

Durch geeignete Wahl der Schichten der Packungswände kann die Sauerstoff-, Wasserdampf- und Aromadurchlässigkeit eingestellt werden.

## Patentansprüche

1. Leicht zu öffnende Packung aus zwei übereinanderliegenden Packungswänden, die im Randbereich der Packung durch Siegeln miteinander verbunden sind, bei denen die eine Packungswand (2) aus einer wenigstens dreischichtigen, eine siegelfähige Oberfläche (5) aufweisenden Verbundfolie und die andere (1) aus einem wenigstens einlagigen Film mit siegelfähiger Oberfläche (4) besteht, dadurch gekennzeichnet, daß die aus der Verbundfolie gebildete Packungswand aus einer ersten Schicht (5) einer Dicke im Bereich von 0,1 bis 10 µm aus siegelfähigem Polymerisat auf Basis von Polyolefin, einer sich an diese anschließenden zweiten, feste Teilchen einer Größe im Bereich von 0,2 bis 20 µm in einer Menge im Bereich von 1 bis 25 Gew.-% enthaltenden, streckorientierten Schicht (6) aus Polymerisat aus α-Olefin mit 2 bis 6 C-Atomen und einer an diese angrenzenden dritten Schicht (7), die aus einer wenigstens einschichtigen Folie besteht, aufgebaut ist, wobei

a) die zweite Schicht (6) der Verbundfolie mit sich innerhalb enger Grenzen bewegendem, geringem Kraftaufwand spaltbar,

b) die Verbundfestigkeiten zwischen der zweiten (6) und den jeweils an diese angrenzenden Schichten (5, 7) größer als die Spaltfestigkeit der zweiten Schicht (6) und

c) die Siegelnahtfestigkeit der ersten Schicht (5) mit der anderen Packungswand (1) größer als die Spaltfestigkeit der zweiten Schicht (6) der Verbundfolie

ist.

2. Packung nach Anspruch 1, dadurch gekennzeichnet, daß die zweite Schicht (6) der die eine Packungswand (2) der Packung bildenden Verbundfolie aus Polypropylen mit einem isotaktischen Anteil von wenigstens 90% besteht.

3. Packung nach Anspruch 1, dadurch gekennzeichnet, daß die zweite Schicht (6) aus Polypropylencopolymerisat mit einem copolymerisierten Anteil an Buten-(1) besteht.

4. Packung nach Anspruch 1 bis 3, dadurch gekennzeichnet, daß die erste Schicht (5) der die eine Packungswand (2) bildenden Verbundfolie aus einem Copolymerisat aus Propylen und 1 bis 6 Gew.-% Äthylen, bezogen auf das Gesamtgewicht des Copolymerisats, besteht, wobei die copolymerisierten Monomeren im wesentlichen statistisch verteilt sind.

5. Packung nach Anspruch 1 bis 4, dadurch gekennzeichnet, daß die erste Schicht (5) aus einem Copolymerisat aus Propylen und 10 bis 15 Gew.-%, Buten-(1), bezogen auf das Gesamtgewicht des Copolymerisats, enthält und die copolymerisierten Monomeren im Polymerisat im wesentlichen statistisch verteilt sind.

6. Packung nach Anspruch 1 bis 5, dadurch gekennzeichnet, daß die erste Schicht (5) aus einem Terpolymerisat aus

a) 93,2 – 99,0 Gew.-% Propylen

b) 0,5 – 1,9 Gew.-% Äthylen und

c) 0,5 – 4,9 Gew.-% eines $C_4 - C_{10}$-α-Olefins

ist, wobei die Komponente c) vorzugsweise Buten-(1) oder Hexen-(1) ist und die copolymerisierten Monomeren im wesentlichen statistisch im Terpolymerisat verteilt sind.

7. Packung nach Anspruch 1 bis 4, dadurch gekennzeichnet, daß die erste Schicht (5) aus Polyäthylen hoher Dichte besteht.

8. Packung nach einem der Ansprüche 1 bis 7, dadurch gekennzeichnet, daß die dritte Schicht (7), der die eine Wand (2) der Packung bildenden Verbundfolie ein Polyamid-, Polyester- oder Polypropylenfilm oder ein Filmlaminat aus diesen mit einem Aluminiumfilm ist.

9. Packung nach einem der Ansprüche 1 bis 8, dadurch gekennzeichnet, daß die mit der Verbundfolie verbundene Packungswand (1) eine heißsiegelbare Schicht (4) aufweist, die aus dem gleichen Polymerisat besteht, das die erste Schicht (5) der Verbundfolie bildet.

10. Packung nach einem der Ansprüche 1 bis 8, dadurch gekennzeichnet, daß die mit der Verbundfolie verbundene Packungswand (1) aus streckorientierungsfreier Polypropylenfolie besteht.

11. Verfahren zur Herstellung einer Packung nach einem der Ansprüche 1 bis 10, dadurch gekennzeichnet, daß man eine Packungswand (2) aus einer Verbundfolie, bestehend aus einer ersten siegelbaren Schicht (5), einer sich an diese anschließenden zweiten Schicht (6) aus einem Polymerisat oder Copolymerisat eines $\alpha$-Olefins mit 2 bis 6 C-Atomen, welche durch biaxiales Strecken orientiert ist und feinverteilt feste Teilchen einer Größe im Bereich von 0,2 bis 20 µm in einer Menge von 1 bis 25 Gew.-%, bezogen auf das Gewicht des die Schicht bildenden Polymerisats enthält und einer sich an die zweite Schicht (6) anschließenden dritten Schicht (7), die aus einem wenigstens einlagigen Film besteht, mit einer Packungswand (1) mit einer siegelbaren Schicht (4) bei einer Temperatur im Bereich von 130 bis 170°C im Randbereich miteinander versiegelt.

## Claims

1. Package which can be easily opened and is composed of two superposed package walls which in the border regions of the package are joined by sealing, one of the package walls (2) being comprised of an at least three-layered composite film having a sealable surface (5), the other package wall (1) being comprised of an at least onelayered film having a sealable surface (4), said package being characterized in that the package wall formed by the composite film comprises a first layer (5) of a polyolefinbased sealable polymer having a thickness of between 0.1 and 10 µm; a directly adjacent second, stretch-oriented layer (6) of a polymer of $\alpha$-olefin having 2 to 6 carbon atoms, which contains solid particles of a size of between 0.2 and 20 µm and in an amount of between 1 and 25% by weight;

and a third layer (7) which is adjacent to this second layer and is composed of an at least one-layered film, whereby

a) the second layer (6) of said composite film can be split with little, very limited effort;
b) the composite strength of the second layer (6) and the adjacent layers (5, 7) is greater than the resistance to splitting of the second layer (6), and
c) the strength of the sealed seam formed by the first layer (5) and the second package wall (1) is greater than the resistance to splitting of the second layer (6) of the composite film.

2. Package as claimed in claim 1, wherein the second layer (6) of the composite film forming the package wall (2) is comprised of polypropylene having an isotactic portion of at least 90%.

3. Package as claimed in claim 1, wherein the second layer (6) is comprised of a polypropylene copolymer with a copolymerized portion of butane-(1).

4. Package as claimed in claims 1 to 3, wherein the first layer (5) of the composite film forming the package wall (2) is comprised of a copolymer of propylene and 1 to 6% by weight, relative to the total weight of the copolymer, of ethylene, whereby the copolymerized monomers are substantially distributed statistically.

5. Package as claimed in claims 1 to 4, wherein the first layer (5) is comprised of a copolymer of propylene and 10 to 15% by weight, relative to the total weight of the copolymer, of butene-(1), whereby the copolymerized monomers are substantially distributed statistically.

6. Package as claimed in claims 1 to 5, wherein the first layer (5) is comprised of a terpolymer of

a) 93.2 to 99.0% by weight of propylene
b) 0.5 to 1.9% by weight of ethylene, and
c) 0.5 to 4.9% by weight of a C4- to C10 $\alpha$-olefin,

whereby component c) preferably is butene-(1) or hexene-(1), and the copolymerized monomers are essentially distributed statistically.

7. Package as claimed in claims 1 to 4, wherein the first layer (5) is comprised of a high-density polyethylene.

8. Package as claimed in any of claims 1 to 7, wherein the third layer (7) of the composite film forming the package wall (2) is a film of polyamide, polyester or polypropylene or a laminate thereof with an aluminium foil.

9. Package as claimed in any of claims 1 to 8, wherein the package wall (1) which is joined to the composite film is provided with a heat-sealable layer (4) composed of the same polymer as the first layer (5) of the composite film.

10. Package as claimed in any of claims 1 to 8, wherein the package wall (1) which is joined to the composite film is composed of a polypropylene film which has not been stretch-oriented.

11. Process for the production of a package as claimed in any of claims 1 to 10, wherein a package wall (2) constitued by a composite film and a package wall (1) provided with a sealable layer (4) are joined in their border regions by sealing, at temperatures in a range of from 130° C to 170° C, said composite film comprising a first sealable layer (5); an adjacent second layer (6) of a polymer or copolymer of an $\alpha$-olefin having 2 to 6 carbon atoms, which has been oriented by biaxial stretching and contains finely divided solid particles of a size of between 0.2 and 20 $\mu$m and in an amount of between 1 and 25% by weight, relative to the weight of the polymer forming the layer; and a third layer (7) which is adjacent to this second layer (6) and comprises an at least one-layered film.

**Revendications**

1. Emballage facilement ouvrable comportant deux parois superposées qui, à la hauteur du bord de l'emballage, sont soudées l'une à l'autre et dont l'une des parois (2) de l'emballage est constituée d'une feuille sandwich à trois couches au moins comportant une face extérieure soudable (5) tandis que la deuxième paroi (1) se compose d'un film, au moins mono-chouche, comportant également une face soudable (4), cet emballage étant caractérisé en ce que la paroi de l'emballage constituée de la feuille sandwich se compose d'une première couche (5) réalisée à partir d'un polymère soudable à base de polyoléfine, d'une épisseur de 0,1 à 10 $\mu$m, d'une deuxième couche (6) accolée à cette première, réalisée à partir d'un polymère à base d'$\alpha$-oléfine, orientée par drapage et contenant de 2 à 6 atomes de carbone ainsi que des particules solides d'une grosseur variant entre 0,2 et 25 $\mu$m, dans une proportion de 1 à 25% en poids et finalement d'une troisième couche (7) accolée à la deuxième et constituée d'une feuille à une couche au moins et en ce que:

a) la deuxième couche (6) de la feuille sandwich est délaminable sous l'effet d'une force de traction faible comprise dans une fourchette très étroite'
b) l'adhérence entre la deuxième couche (6) et chacune des couches voisines (5, 7) est plus grande que la résistance au délaminage de cette deuxième couche (6);
c) la résistance du cordon de soudure entre la première couche (5) et l'autre paroi de l'emballage (1) est plus grande que la résistance au délaminage de la deuxième couche (6) de la feuille sandwich.

2. Emballage selon la revendication 1, caractérisé en ce que la deuxième couche (6) de la feuille sandwich constituant l'une des parois (2) de l'emballage se compose de polypropylène avec une fraction isotactique d'au moins 90%.

3. Emballage selon la revendication 1, caractérisé en ce que la deuxième couche (6) est composée d'un copolymère de polypropylène contenant une fraction de butylène — (1) copolymérisée.

4. Emballage selon l'une des revendications 1 à 3, caractérisé en ce que la première couche (5) de la feuille sandwich constituant l'une des parois (2) de l'emballage se compose d'un copolymère de propylène et de 1à 6% en poids d'éthylène, rapportés au poids total du copolymère, et en ce que les monomères copolymérisés sont répartis d'une manière essentiellement statistique.

5. Emballage selon l'une des revendications 1 à 4, caractérisé en ce que la première couche (5) se compose d'un copolymère de propylène et de 10 à 15% en poids de butylène — (1), rapportés au poids total du copolymère, et en ce que les monomères copolymérisés sont répartis d'une manière essentiellement statistique.

6. Emballage selon l'une des revendications 1 à 5, caractérisé en ce que la première couche (5) se compose d'un terpolymère qui est constitué

a) de 93,2 à 99% en poids de propylène
b) de 0,5 à 1,9% en poids d'éthylène et
c) de 0,5 à 4,9% en poids d'$\alpha$-oléfine avec 4 à 10 atomes de carbone

et dont la composante c) est essentiellement du butylène — (1) ou de l'hexylène — (1) et en ce que dans le terpolymère les monomères copolymérisés sont répartis d'une manière essentiellement statistique.

7. Emballage selon l'une des revendications 1 à 4, caractérisé en ce que la première couche (5) se compose de polyéthylène de grande densité.

8. Emballage selon l'une des revendications 1à 7, caractérisé en ce que la troisième couche (7) de la feuille sandwich constituant l'une des parois (2) de l'emballage se compose d'un film de polyamide, ou de polyester, ou de polypropylène, ou d'un film stratifié constitué d'une de ces matières alliée à un film d'aluminium.

9. Emballage selon l'une des revendications 1 à 8, caractérisé en ce que la paroi (1) de l'emballage reliée à la feuille sandwich comporte une couche soudable à chaud (4) qui se compose du même polymère que celui qui constitue la première couche (5) de la feuille sandwich.

10. Emballage selon l'une des revendications 1 à 8, caractérisé en ce que la paroi (1) reliée à la feuille sandwich se compose d'une feuille de polypropylène non orientée et non drapée.

11. Procédé pour la fabrication d'un emballage selon l'une des revendications 1 à 10, caractérisé en ce qu'une paroi (2) de l'emballage, composant une feuille sandwich se composant d'une première couche soudable (5), d'une deuxième couche (6) placée contre la première et se composant d'un polymère ou d'un copolymère d'une $\alpha$-oléfine contenant 2 à 6 atomes de carbone et qui est orientée par un drapage biaxial et renferme des particules solides finement réparties dont la grosseur varie entre 0,2 et 20 μm et représentant de 1 à 25% en poids, rapportés au poids du polymère constituant la couche, et d'une troisième couche (7) constituée d'un film au moins monocouche placé contre la deuxième couche, est soudée à proximité des bords et sous l'effet d'une température de 130 à 170°C, sur l'autre paroi (1) de l'emballage comprenant une couche (4) se prêtant au soudage.

Fig. 1

SCHNITT A - B

Fig. 2